Europäisches Patentamt

European Patent Office

Office européen des brevets

(19)

(11) Veröffentlichungsnummer: **0 069 296**
**B1**

(12) # EUROPÄISCHE PATENTSCHRIFT

(45) Veröffentlichungstag der Patentschrift:
16.03.88

(21) Anmeldenummer: 82105603.3

(22) Anmeldetag: 25.06.82

(51) Int. Cl.⁴: **B 65 D  65/40**, B 32 B  33/00

---

(54) Verbundfolie.

---

(30) Priorität: 08.07.81  DE 3126979

(43) Veröffentlichungstag der Anmeldung:
12.01.83 Patentblatt 83/2

(45) Bekanntmachung des Hinweises auf die Patenterteilung:
16.03.88 Patentblatt 88/11

(84) Benannte Vertragsstaaten:
AT BE CH DE FR GB IT LI LU NL SE

(56) Entgegenhaltungen:
EP-A-0 032 244
DE-A-2 703 005
FR-A-2 171 507
FR-A-2 178 461

(73) Patentinhaber: RB Kunststoffpatent- Verwertungs
AG, Westbahnhofstrasse 11, CH- 4500 Solothurn
(CH)

(72) Erfinder: Belz, Roland, Sonnenhalde 31, D-7022
Leinfelden- Echterdingen (DE)

(74) Vertreter: Patentanwälte Ruff und Beier,
Neckarstrasse 50, D-7000 Stuttgart 1 (DE)

EP 0 069 296 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**0 069 296**

## Beschreibung

Die Erfindung betrifft einen flachen Verbundwerkstoff aus mindestens zwei Schichten, bei dem mindestens eine äußere in Wasser normalerweise unlösliche Deckschicht mit einer in Wasser lösbaren, mindestens einschichtigen Reaktionsschicht verbunden ist, die einen Lösungsvermittler für die Deckschicht enthält und mindestens die Deckschicht durch Extrudieren aus einem thermoplastischen Kunststoff porenfrei ausgebildet ist. In der europäischen Teilanmeldung 0 193 213 zu dieser Anmeldung wird eine weitere Ausgestaltung einer Verbundfolie beansprucht.

In der deutschen Offenlegungsschrift 2 703 005 des Anmelders ist eine zur einmaligen Benutzung bestimmte Folie zur Auflage auf einen Toilettensitz beschrieben. Diese Folie kann bei einer Ausführungsform als Verbundfolie ausgebildet sein, wobei eine wasserlöslichen Schicht, die dem Benutzer zugewandt ist, auf ihrer dem Benutzer abgewandten Seite eine in Wasser unlösliche Deck- bzw. Versiegelungsschicht aufweist. Diese Deckschicht kann in saurem bzw. basischem Milieu aufgelöst werden. Hierzu enthält die wasserlösliche Schicht einen entsprechenden basischen oder sauren Zusatz, so daß die Folie beim vollständigen Eintauchen in Wasser als Ganzes löslich ist, nicht jedoch dann, wenn Wasser nur mit ihrer Deckschicht in Berührung kommt.

In der nicht vorveröffentlichten EP-A-80 108 243.9 des Anmelders (Veröffentlichungsnummer 32 244), ist eine Weiterbildung der Verbundfolie beschrieben und erwähnt, daß eine derartige Verbundfolie auch als Verpackungsmaterial und zur Herstellung von Tragtaschen, Beuteln u.dgl. geeignet ist.

Es wurde gefunden, daß ein Verbundwerkstoff der in der EP-A-32 244 beschriebenen Art in Form einer steifen Verbundplatte, insbesondere mit einer halbsteifen bis steifen Reaktionsschicht für viele Anwendungszwecke, insbesondere als Verpackungsmaterial hervorragend geeignet ist. Eine solche mechanische Tragfähigkeit bzw. Steifheit kann erreicht werden, indem die Polymere der Reaktions- und/oder der Deckschicht selbst steif formuliert werden oder die Reaktionsschicht und/oder die Deckschicht mit Füllstoffen, insbesondere mineralischen Füllern und/oder Fasermaterial versehen werden. So kann die Reaktionsschicht der Verbundfolie nach Art von Papier, Karton, Pappe oder Wellpappe ausgebildet sein, wobei das Bindemittel wasserlöslich ist oder durch den in der Reaktionsschicht enthaltenen Lösungsvermittler lösbar ist, der vorzugsweise gleichzeitig auch Lösungsvermittler für die Deckschicht ist. Weiterhin kann die Reaktionsschicht auch entsprechend der Papierherstellung durch Anschwemmen der Bestandteile aus wässriger Lösung in alkalischem bzw. saurem Milieu hergestellt werden. Die Verbundplatte kann in Form von Zuschnitten für Verpackungsmaterial vorliegen und vorgestanzt sein und Prägelinien für eine spätere Faltung besitzen. Sie kann auch zu Schachteln ggf. mit Deckel vorgeformt sein. Sie eignet sich insbesondere als Verpackung für Zigaretten und andere Waren, deren Verpackung von den Verbrauchern normalerweise mehr oder weniger achtlos weggeworfen werden und eine Verschmutzung der Umwelt bedeuten, wenn sie sich nicht innerhalb kurzer Zeit auflösen bzw. verrotten.

Bei einer Ausführungsform der Erfindung ist die Verbundplatte bedruckt, insbesondere bunt bedruckt, was auch dann keine Umweltbelastung zur Folge hat, wenn das Verpackungsmaterial vom Verbraucher einfach weggeworfen wird, weil die Verpackungen durch Eindringen von Feuchtigkeit rasch zerfallen. Wird die Reaktionsschicht getrennt von der Deckschicht hergestellt, so wird vorzugsweise die Reaktionsschicht bedruckt, wobei die Druckfähigkeit durch die Verwendung entsprechender Füllstoffe begünstigt werden kann.

Es wurde auch gefunden, daß sich Polymere und andere Bestandteile für die Herstellung der erfindungsgemäßen Verbundplatte eignen, die sich beim Zerfall der Platte bzw. der daraus hergestellten Verpackung sogar positiv auf die Umwelt auswirken.

Werden die Verpackungen nach ihrem Gebrauch normalerweise mit Flüssigkeiten vermischt oder durch solche weggespült, dann haben sich Bestandteile mit Eigenschaften als Flockungshilfsmittel als besonders vorteilhaft erwiesen, worauf noch eingegangen wird. Mit besonderem Vorteil besteht die erfindungsgemäße Verbundplatte bzw. die daraus hergestellte Verpackung ausschließlich aus solchen Materialien, die bei Zutritt von Feuchtigkeit oder Flüssigkeit an der Seite der Reaktionsschicht zerfallen bzw. sich durch gegenseitige Lösungsvermittlung auflösen.

Die Deckschicht und/oder die Reaktionsschicht können an ihren freien Oberflächen auch eine textile Beschichtung aus Einzelfasern aufweisen, die in der Plattenoberseite verankert oder mit diesen verklebt sind. Dabei kann die Länge der Fasern, die in begrenztem Maße untereinander verfilzt sind, im Bereich von ca. 0,01 bis 2 mm oder höher liegen. Die Fasern bringen eine mechanische Verstärkung der Platte und verhindern ein Aneinanderhaften aufgrund etwaiger elektrostatischer Aufladung. Trotzdem läßt sich die Platte nach ihrem Gebrauch völlig auflösen, da die Fasern zwar in gewisser Weise miteinander verfilzt, aber nicht bleibend miteinander verbunden sind. Als Fasern werden vorzugsweise solche aus Cellulose, insbesondere Baumwolle verwendet. Aber auch andere Faserstoffe sind geeignet.

Die Deckschicht und die nächstfolgende und ggf. weitere Schichten sind vorzugsweise flächig miteinander verbunden, insbesondere verschweißt. Sie können jedoch auch durch Anlösen der einen und/oder der anderen Oberfläche oder mit Hilfe eines Klebers verklebt sein. Die Deckschicht und die Reaktionsschicht bestehen vorzugsweise aus demselben, in Wasser normalerweise unlöslichen Kunststoff, wobei die Reaktionsschicht zusätzlich lösungsvermittelnde Zusätze für sich und die Deckschicht enthält. Dabei können diese Zusätze in der Reaktionsschicht gleichmäßig verteilt oder im Grenzbereich zur Deckschicht in höherer Konzentration vorliegen. Dies hängt in der Regel davon ab, wie dick die Reaktionsschicht ist und wie leicht sich die Unlöslichkeit in Wasser mit Hilfe des Lösungsvermittlers in eine Löslichkeit umwandeln läßt. Die Reaktionsschicht kann, wenn sie aus einem in Wasser lösbaren Material, wie Hydroxypropylcellulose, besteht,

2

auch frei von lösungsvermittelnden Zusätzen sein und an der zur Deckschicht weisenden Seite eine zusätzliche Zwischenschicht aufweisen, die die lösungsvermittelnden Zusätze für die Deckschicht enthält.

Da die Deckschicht nicht selbsttragend zu sein braucht, wenn die Reaktionsschicht die Tragfunktion übernimmt, ist die in der Regel dünner als die Reaktionsschicht. Sie kann sehr dünn gehalten werden, da sich gezeigt hat, daß aufgrund der Herstellung durch Extrusion bereits eine Schichtdicke von 1 bis 5 μm, insbesondere 2 bis 3 μm völlig ausreicht, um die gewünschte Dichtigkeit zu erzielen. In der Regel liegt daher die Schichtdicke der Deckschicht unter 10 μm. Die Dicke der Reaktionsschicht hängt davon ab, wieviel weitere Schichten die Verbundplatte noch enthält und welche mechanischen Belastungen sie aushalten soll. Ihre Schichtdicke liegt bei mindestens 10 bis 50 μm und kann die Stärke von Papier, Karton oder Pappe haben. Die Dicke der Reaktionsschicht bzw. der Reaktionsschichten kann dabei bis zu 0,5 mm oder gar bis 1 mm betragen, wobei hier keine Grenzen gesetzt sind. Auch können in die Schichten oder zwischen die Schichten noch Verstärkungen eingelegt sein, wobei vorzugsweise darauf geachtet wird, daß die Verstärkungen ihrerseits beim Auflösevorgang leicht zerfallen, wie dies beispielsweise bei Einzelfasern der Fall ist. Die Reaktionsschicht kann auch porös ausgebildet sein und sogar die Struktur von Wellpappe besitzen, insbesondere einen Aufbau von Wellpappe mit Feinwelle (E-Welle) und/oder Doppelwelle. Es sind Dicken der Verbundplatte bis 5 mm und mehr möglich. Wenn es auf die mechanische Belastbarkeit der Deckschicht ankommt, kann diese aber auch gleich dick oder dicker als die Reaktionsschicht gehalten werden, insbesondere, wenn die Deckschicht ohne Gefährdung der Wasserfestigkeit einen bestimmten Abrieb oder Verkratzungen aushalten soll. Die Deckschicht kann dann selbsttragend bis steif ausgebildet werden, wobei dem Polymeren der Reaktionsschicht dann im wesentlichen nur noch die Aufgabe zukommen kann, als Träger bzw. Bindemittel für den Lösungsvermittler zu dienen.

Zumindest dann, wenn die Dicke der Deckschicht in der Größenordnung der Dicke der Reaktionsschicht liegt oder die Deckschicht gar dicker ist als letztere, dann wird die Reaktionsschicht vorzugsweise so strukturiert und formuliert, daß sie sich relativ langsam auflöst, zuvor jedoch so viel wie möglich an Feuchtigkeit speichert. Dadurch kann der Lösungsvermittler in der Reaktionsschicht angelöst werden und dessen Lösung wiederum die Lösung der Deckschicht veranlassen, bevor die Reaktionsschicht abgelöst wird und damit die Gefahr besteht, daß der Lösungsvermittler weggewaschen wird, bevor die Deckschicht gelöst ist. Für diesen Zweck eignen sich für die Reaktionsschicht als Bindemittel quellfähige Substanzen, die bei Wasserzutritt gallertig werden, aber erst dann zerfallen, wenn auch die Deckschicht zerfällt. Auch ist es möglich, das Polymere der Reaktionsschicht so einzustellen, daß es bei im wesentlichen neutralem pH oder bei schwach saurem bzw. schwach basischem pH löslich ist, nicht aber in stark saurem bzw. stark alkalischem pH. Wenn der pH bei Wasseraufnahme durch den Lösungsvermittler aber relativ stark sauer bzw. stark basisch wird, findet zunächst nur eine Auflösung der Deckschicht statt. Ist diese abgelöst und der Lösungsvermittler teilweise ausgelaugt, kann sich auch die Reaktionsschicht lösen.

Das Material der Deckschicht ist vorzugsweise elastisch formuliert, damit die Folienplatte oder ein gestanzter oder vorgeprägter Zuschnitt für eine Verpackung gebogen oder geknickt werden kann, ohne daß die Deckschicht bricht oder reißt.

Als Material für die Deckschicht eignen sich solche extrudierbaren Kunststoffe, die in Wasser und den üblicherweise vorkommenden, im wesentlichen neutralen wässrigen Lösungen nicht löslich sind, durch geeignete Lösungsvermittler, insbesondere Säuren oder Basen aber löslich gemacht werden können. Die Reaktionsschicht kann dagegen aus einem wasserlöslichen oder verzögert löslichen Kunststoff wie Polyvinylalkohol oder Hydroxypropylcellulose (Klucel J von Hercules Powder) bestehen oder diese enthalten, z. B. als Bindemittel für Fasern und/oder für den Lösungsvermittler.

Bevorzugte Materialien für eine flexible Deck- oder Reaktionsschicht sind Co- bzw. Terpolymere von ungesättigten organischen Säuren wie Acrylsäure, Methacrylsäure, Maleinsäureanhydrid und Crotonsäure als mit dem Lösungsvermittler reagierende Komponente, mit Vinyläthern oder Acrylaten als flexibilisierende Komponente. Dabei können die reaktiven Komponenten und die flexibilisierenden Komponenten jeweils für sich allein oder als Mischung eingesetzt werden. Beispiele für flexible Materialien sind in der Tabelle aufgeführt, insbesondere die Nr. 39 und 68.

Bevorzugte Materialien für eine steife Deck- bzw. Reaktionsschicht sind Co- bzw. Terpolymere von ungesättigten organischen Säuren wie Acrylsäure, Methacrylsäure, Maleinsäureanhydrid oder Crotonsäure als mit dem Lösungsvermittler reagierende Komponente, mit Styrol oder Vinylacetat oder Methylmetacrylat als steifmachende Komponenten und Vinyläthern bzw. Acrylaten als zähigkeitsvermittelnde Komponenten. Dabei können die reaktiven Komponenten und die flexibilisierenden bzw. zähigkeitsvermittelnden Komponenten jeweils für sich allein oder als Mischung eingesetzt werden.

So besteht bei einer Ausführungsform vorzugsweise mindestens die Deckschicht aus einer thermoplastischen, in Wasser unlöslichen, jedoch in basischem Medium löslichen homopolymeren oder copolymeren Säure, insbesondere einer solchen, die unter Verwendung von Acrylsäure, Methacrylsäure, Crotonsäure und/oder Maleinsäureanhydrid mit Styrol und Vinyläther im Molverhätnis 1 : 1 : 0,3 gewonnen ist.

Geeignete extrudierbare Kunststoffe sind auch feste Copolymerisate aus Vinylacetat und einem geringen Teil Crotonsäure, die als niedrigviskoses Polymerisat vorliegen und alkalilöslich sind. Ein derartiges Polymerisat wird beispielsweise unter der Bezeichnung Vinnapas C 305 von der Firma Wacker-Chemie GmbH, München vertrieben.

Auch können die einzelnen Schichten der Verbundplatte aus Mischungen von Kunststoffen bestehen.

Als Lösungsvermittler zum Auflösen der Deckschicht kommen für saure Polymerisate, insbesondere

3

wasserlösliche Carbonate, sekundäre und tertiäre Phosphate, Silicate, Borate, Amine und basische Amide in Betracht. Die Mitverwendung von sogenannten Sprengmitteln, die bei Kontakt mit Wasser stark aufquellen oder Gase erzeugen, kann ebenfalls von Vorteil sein. Ein solches Sprengmittel ist beispielsweise Natriumcarboxymethylcellulose (Nymcel ZSB 10 von Nyma). Dabei wird bei sämtlichen Materialien für die Verbundplatte vorzugsweise darauf geachtet, daß sie umweltfreundlich sind, wie dies bei den oben genannten Produkten weitgehend der Fall ist.

Zur Herstellung der Verbundplatte werden einzelne, vorzugsweise sämtliche Schichten der Platte aus thermoplastischen Stoffen mit den entsprechenden Eigenschaften durch Extrudieren geformt und miteinander verbunden. Dabei können die einzelnen Schichten als getrennte Schichten extrudiert und danach miteinander verbunden werden. Die Verbindung erfolgt vorzugsweise, solange die Schichten noch heiß und klebrig sind, durch einfaches Aufeinanderlegen. Die Oberflächen können jedoch, wie bereits erwähnt, auch nachträglich klebrig gemacht werden. Die aus dem Extruder kommenden und ggf. gereckten Schichten können unmittelbar weiterverarbeitet oder zur Zwischenlagerung aufgerollt werden und zwar einzeln und vorzugsweise auch als Verbund.

Die einzelnen Schichten können durch eine Koextrusionsdüse extrudiert und dabei miteinander verbunden werden. Hierdurch wird eine besonders innige Verbindung erhalten. Dabei sollte jedoch darauf geachtet werden, daß die Bestandteile der beiden Schichten so aufeinander abgestimmt sind, daß eventuell entstehende Abfälle in dem einen oder anderen Extruder wieder verwendbar sind, ohne die Materialzusammensetzung der Schichten nachteilig zu beeinflussen. So werden Abfälle, die Lösungsvermittler enthalten, zur Herstellung einer den Lösungsvermittler enthaltenden Reaktionsschicht oder Zwischenschicht wiederverwendet.

In der Regel kommen die einzelnen Schichten dicker aus dem Extruder heraus als der gewünschten Dicke in der Verbundplatte entspricht. In diesem Falle werden die Schichten auf die gewünschte Dicke gereckt, was einzeln oder im Verbund geschehen kann.

Für die erfindungsgemäße Verbundplatte gibt es zahlreiche Anwendungsmöglichkeiten, die vor allem auch auf dem Verpackungssektor liegen. Die Beseitigung von nicht mehr brauchbaren Verpackungsmaterialien stellt heute ein erhebliches Problem dar. Dies kann durch die erfindungsgemäße Verbundplatte beseitigt werden, da sie nach Gebrauch in Wasser bzw. wässrigen Lösungen aufgelöst werden kann und in ihrer Materialbeschaffenheit so zusammengesetzt werden kann, daß die dabei in Lösung gehenden Stoffe unschädlich bzw. umweltfreundlich sind. Die Maleinsäureanhydrid- und die Acrylsäure-Copolymere ergeben nach der Hydrolyse ähnliche Produkte wie die in großem Umfang als Flockungshilfsmittel bei der Klärschlammaufbereitung verwendeten Polymeren auf Acrylsäurebasis. Sie sind daher im Abwasser nützliche Produkte.

Das Cellulosederivat Klucel ist nach Herstellerangaben in toxikologischer Hinsicht ebenso einzuschätzen wie gereinigte Cellulose.

Die als Lösungsvermittler einsetzbaren Carbonate, Phosphate Silikate und Borate sind Bestandteile von Waschmitteln, ebenso das Sprengmittel Nymcel, das auch als Flockungshilfsmittel eingesetzt werden kann.

Da die erfindungsgemäße Verbundplatte mindestens zum Teil aus thermoplastischen Materialien besteht, können die Verpackungen aus der Platte durch Verschweißen oder Versiegeln dicht verschlossen werden.

Dabei besitzen alle Verpackungsformen die Eigenschaft, daß sie sich beim Wegwerfen nach dem Gebrauch in wässrigem Milieu oder bei Zutritt von Feuchtigkeit, z. B. im Freien, innerhalb einstellbarer Zeit auflösen.

Bei einer bevorzugten Ausführungsform der Erfindung besitzt das Plattenmaterial die Form eines Kartons, einer Dose, einer Schachtel o. dgl. Dabei kann die Wandung jeweils so ausgebildet sein, daß sie sowohl an ihrer Innen- als auch an ihrer Außenseite eine Deckschicht aufweist. Dies kann dadurch erreicht werden, daß zur Bildung einer Wandung jeweils zwei Verbundplatten so aufeinander gelegt werden, daß ihre wasserlöslichen Seiten einander zugewandt sind und die Deckschichten nach außen weisen. Auf diese Weise sind die Schachteln u. dgl. feuchtigkeitsunempfindlich. Werden sie dagegen bei oder nach ihrem Gebrauch mechanisch aufgerissen, dann kann Wasser zwischen die wasserlöslichen Schichten der Platte gelangen, so daß sich die Plattenteile und damit die Schachteln u. dgl. auflösen können. Es ist aber auch möglich, die Verbundplatte so auszubilden, daß eine wasserlösliche Reaktionsschicht beidseitig mit einer Deckschicht versehen ist. Nach einer mechanischen Zerstörung ist auch diese Platte völlig auflösbar, da das Wasser zwischen den Deckschichten in die Platte eindringen und die Reaktionsschicht und danach die Deckschicht lösen kann. Bei dieser Ausführungsform ist es weiterhin möglich, die Reaktionsschicht im Innern porös auszubilden oder mit einer saugfähigen Einlage zu versehen, wodurch das Eindringen von Wasser in die Reaktionsschicht begünstigt und damit der Auflösevorgang beschleunigt wird. Ähnliches gilt für Verpackungen aus einer steifen Verbundplatte, die wie bereits erwähnt, in der Trägerschicht eine Wellenstruktur haben kann.

Die physikalischen und auch die chemischen Eigenschaften der einzelnen Schichten der Verbundplatte können dadurch variiert werden, daß für diese Schichten Kunststofformulierungen verwendet werden, deren Zusammensetzung in entsprechender Weise variiert wird. Die Auflösungsgeschwindigkeit der einzelnen Schichten kann durch das Verhältnis des Säure- bzw. Basenanteils im Copolymeren bzw Terpolymeren zum Anteil an Comonomeren bzw. Termonomeren sowie zusätzlich durch Art und Gehalt des Lösungsvermittlers in der Reaktionsschicht bestimmt werden. Weiterhin kann die Auflösungsgeschwindigkeit für die Verbundfolie dadurch vermindert werden, daß weniger gut lösliche oder nicht gut lösliche Stoffe in disperser Phase oder in gelöster Form in die Materialien der einzelnen Schichten eingelagert werden. Falls erwünscht, können in die eine und/oder andere Schicht auch die Klebrigkeit erhöhende Zusätze eingelagert werden.

4

Gemäß einer weiteren Ausführungsform der Erfindung kann der Lösungsvermittler für die an sich in Wasser unlösliche Deckschicht auch in der Weise in die Reaktionsschicht eingelagert werden, daß wasserlösliche Hohlfasern oder poröse Hohlfasern verwendet werden, die mit dem Lösungsvermittler gefüllt oder imprägniert sind. Hierdurch kann die Einmischung bzw. das Einbinden eines Lösungsvermittlers, der mit dem Material der Reaktionsschicht nicht ohne weiteres mischbar ist, erleichtert werden. Es ist auch möglich, den Lösungsvermittler in verkapselter Form in der Reaktionsschicht bzw. in der Randschicht zur Versiegelung vorzusehen. So kann der Lösungsvermittler mit Vorteil in sogenannte Mikrokapseln eingeschlossen sein, deren Haut bzw. Umhüllung aus wasserlöslichem Material besteht, das bei der Herstellungstemperatur nicht schmilzt.

Weitere Merkmale der Erfindung ergeben sich aus der folgenden Beschreibung von bevorzugten Ausführungsformen in Verbindung mit der Zeichnung und den Ansprüchen.

In der Zeichnung zeigen:

Fig. 1 einen Querschnitt durch eine Ausführungsform der Erfindung in Form einer Verpackung für trockenes Gut,

Fig. 2 die Ausführungsform nach Fig. 1 nach dem Entleeren und dem Zutritt von Wasser, jeweils in schematischer Darstellung,

Fig. 3 einen Querschnitt durch eine andere Ausführungsform in Form einer Verpackung für wasserhaltiges Gut.

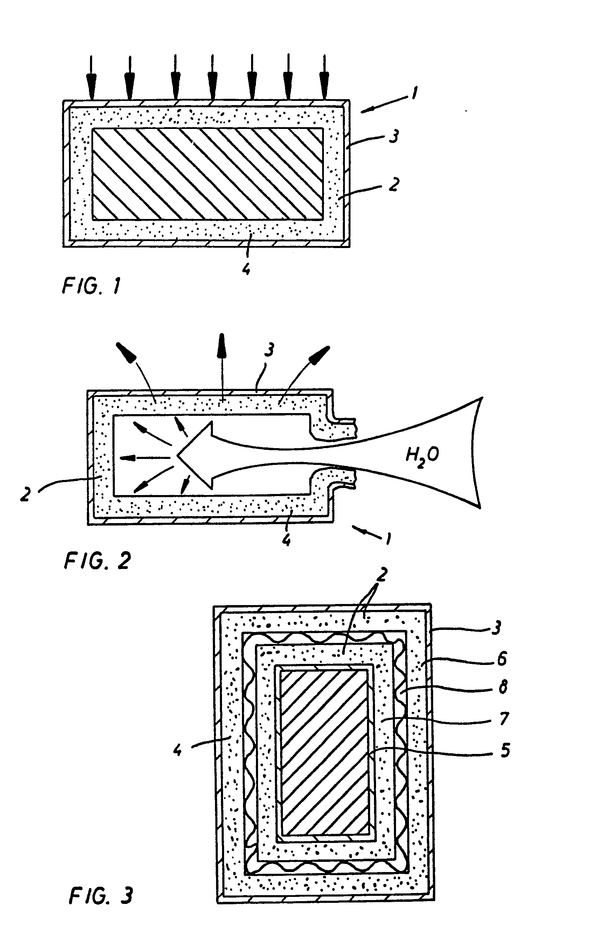

Bei der in den Figuren 1 und 2 dargestellten Ausführungsform der Erfindung sind zur besseren Übersichtlichkeit die Wandstärken der einzelnen Schichten der Verpackung übertrieben groß dargestellt. Die Wandung 1 der Verpackung weist eine selbsttragende Reaktionsschicht 2 auf, die an ihrer Außenseite mit einer dünneren Deckschicht 3 versehen ist. Das Verhältnis der Dicken bzw. Wandstärken von Reaktionsschicht zu Deckschicht liegt bei ca. 3 : 1. Sowohl die Reaktionsschicht 2 als auch die Deckschicht 3 bestehen aus einem thermoplastischen freie Carboxylgruppen aufweisenden oder solche unter Einwirkung von Wasser bildenden Copolymer, das in basischem Milieu löslich ist, nicht jedoch in sauren oder im wesentlichen neutralen Lösungen. Die Reaktionsschicht 2 enthält zusätzlich noch feinste Partikel 4 einer basischen Substanz, die als Lösungsvermittler eingelagert ist. Dabei ist die Menge an Lösungsvermittler 4 so bemessen bzw. in einem ausreichenden Überschuß vorhanden, um sowohl die Reaktionsschicht als auch die Deckschicht lösbar zu machen.

Die in Fig. 1 dargestellete Verpackung hat im Querschnitt eine geschlossene Form und kann beispielsweise durch Koextrusion der beiden Schichten durch eine entsprechend gestaltete Rechteck-Düse direkt als Rechteckprofil hergestellt werden. Dabei können aus dem erhaltenen Endlosprofil entsprechende Stücke abgelängt und nach dem Befüllen an den Enden durch Verschweißen verschlossen werden. Die Verpackung dient für stückiges bis pulverförmiges Gut, so z. B. für Kleinwaren für den Haushalt, wie Nägel, Schrauben u. dgl., kann auber auch für Zigaretten, Nahrungsmittel usw. Anwendung finden.

Durch die wasserfeste Deckschicht ist die Verpackung beständig gegen Wasserzutritt von außen. Nach dem Öffnen und Entleeren der Packung kann, wie dies in Fig. 2 schematisch dargestellt ist, Wasser in die Packung eindringen und die Reaktionsschicht aufgrund des darin gleichmäßig verteilten Lösungsvermittlers allmählich auflösen. Die Feuchtigkeit dringt durch die erweichte Reaktionsschicht bis zur Deckschicht und vermag diese aufgrund des gelösten alkalischen Lösungsvermittlers und des damit erhaltenen hohen pH-Wertes aufzulösen. Auf diese Weise wird die Packung vollständig aufgelöst, wobei die Zeitspanne, innerhalb der die Packung bei Zutritt von Wasser verfallen soll, durch entsprechende Formulierung der Schichten eingestellt werden kann.

Es ist auch möglich, die Packung durch Falten aus einer Platte herzustellen und die Ränder durch Schweißen oder Kleben miteinander zu verbinden. Bei ausreichender Überlappung der Ränder kann die Reaktionsschicht an den Schnittkanten ohne Nachteil ungeschützt verbleiben, da in der Regel die Packungen vor Entnahme des Inhalts nicht unmittelbar mit Wasser in Berührung kommen, sondern ihren Inhalt lediglich vor Feuchtigkeitszutritt schützen sollen.

Es ist auch möglich, die erfindungsgemäße Verbundplatte durch Tiefziehen o. dgl. zu verformen und damit eine Packung herzustellen, die aus einem Karton besteht, auf dem der zu verpackende Artikel liegt und diesen dann mit einem haubenförmig geformten durchsichtigen Kunststoffteil aus der erfindungsgemäßen Verbundplatte zu überdecken, das mit seinen Rändern mit dem Karton fest verbunden ist und den zu verpackenden Gegenstand somit einschließt. Hierbei hat der Karton vorzugsweise ebenfalls den Aufbau der erfindungsgemäßen Platte.

Bei der in Fig. 3 dargestellten Ausführungsform der Erfindung weist die Packung zusätzlich zu der äußeren Deckschicht 3 eine innere Deckschicht 5 auf, so daß die Packung auch innen mit einer Flüssigkeit gefüllt werden kann, ohne daß die Packung aufgelöst wird. Die Reaktionsschicht 2 ist ebenfalls doppelt ausgebildet, wobei ein äußerer Teil 6 der Reaktionsschicht 2 von einem inneren Teil 7 durch eine als Abstandhalter dienende Wellenstruktur 8 getrennt sind. Die beiden Reaktionsschichten können auch lediglich lose aneinanderliegen. Die Wellenstruktur 8 dient dazu, nach dem Aufreißen der Packung den freien Wasserzutritt zwischen die beiden Teile 6 und 7 der Reaktionsschicht 2 zu ermöglichen, damit der Auflösungsvorgang nach Gebrauch der Packung schnell stattfinden kann. Die Wellenstruktur kann aus einem Fasermaterial bestehen, das nach dem Auflösen der Verpackung oder währenddessen ebenfalls zerfällt. Es ist auch möglich, aus einer derartigen doppelten Verbundplatte mit Deckschichten auf beiden Seiten Dosen und Flaschen zu fertigen, beispielsweise durch Tiefzieh- oder Blasverfahren.

# 0 069 296

## Beispiele

Im folgenden werden einige Beispiele für die Herstellung von sauren Copolymeren und Termonomeren für die Deckschicht aufgeführt, wobei diese Polymere, wenn sie mit basischen Stoffen vermischt sind, auch als Material für die Reaktionsschicht verwendet werden können. Als die Löslichkeit in Basen bewirkendes Monomer ist Maleinsäureanhydrid bevorzugt. Als Comonomere werden bei Copolymeren vorzugsweise Styrol oder Methacrylat und bei Terpolymeren zusätzlich Äthylvinyläther oder Methylacrylat sowie Butylacrylat verwendet.

Die Polymerisation wird in üblicher Weise unter Verwendung von Radikalbildnern, z. B. Peroxyden, als Katalysatoren bei Temperaturen zwischen Raumtemperatur und 200°C durchgeführt. Als Polymerisationsverfahren kommen die bekannten Polymerisationsverfahren, einschließlich der Substanzpolymerisation infrage, wobei eine Durchführung im Reaktionsextruder bevorzugt ist. Einige Eigenschaften der so erhaltenen Copolymere und Terpolymere ergeben sich aus der nachfolgenden Tabelle. Zur Bildung der Reaktionsschicht können die Polymere mit bis zu 50 Gewichtsprozent an basischer Substanz vermischt werden.

In der Tabelle stehen die folgenden Abkürzungen für:

| | | |
|---|---|---|
| LM | = | Lösungsmittel |
| MSA | = | Maleinsäureanhydrid |
| WAS | = | Wasser |
| PHOS | = | Triammoniumphosphat |
| EVE | = | Ethylvinyläther |
| MAC | = | Methylacrylat |
| BAC | = | n-Butylacrylat |
| SUB | = | Substanz (lösungsmittelfrei) |
| ACE | = | Aceton |
| BEN | = | Benzol |
| LAP | = | Laurylperoxid |
| CHC | = | Bis(4-tertiärbutylcyclohexyl)peroxidicarbonat (Perkadox 16) |

### Tabelle
### Herstellung und Charakterisierung von Maleinsäureanhydrid-Copolymeren
### (Abkürzungen auf gesondertem Blatt)

| Nr | Comonomere I | II | Katalysator | %a) | LM | Molverhältnis MSA | I | II | Polymerisations- temp. °C | -zeit h | Löslichkeit b) WAS | NaOH 1 | 3 | 10 | PHOS 1 | 3 | 10 | Fließbereich c) °C | Filme |
|---|---|---|---|---|---|---|---|---|---|---|---|---|---|---|---|---|---|---|---|
| 38 | EVE | | LAP | 0,1 | BEN | 1 | 1 | | 70 | 6 | 1 | | 4 | | | 4 | | 240E | flexibel |
| 39 | EVE | | LAP | 0,1 | SUB | 1 | 1 | | 70 | 6 | 1 | | 3 | | | 4 | | 240E | flexibel |
| 49 | MAC | | | | ACE | 1 | 1 | | 80 | 7 | 1 | | 4 | | | 4 | | 220E | flexibel, etwas klebrig |
| 51 | MAC | | | | BEN | 1 | 1,2 | | 80 | 6 | 1 | | 3 | | | 4 | | | flexibel, etwas klebrig |
| 68 | MAC | BAC | CHC | 0,1 | SUB | 1 | 0,6 | 0,4 | 60 | 7 | 1—2 | 4 | 4 | 4 | 4 | 4 | 4 | 220—230 | flexibel |
| 69 | MAC | BAC | CHC | 0,1 | SUB | 1 | 0,5 | 0,5 | 60 | 7 | 1—2 | 2 | 3 | 3 | 2 | 3 | 3 | | flexibel |

a) bezogen auf Monomerengemisch
b) 1/3/10: 1 bzw. 3 bzw. 10%-ige Lösungen 24 h-Beurteilung: 1 = unlöslich; 2 = quillt; 3 = langsam löslich; 4 = schnell löslich
c) gemessen auf der Kolferbank; E = nur Erweichung

## Beispiele für steife Copolymere

Copolymerisation Vinylacetat/Maleinsäureanhydrid:
13 g (0,5 Mol) Vinylacetat, 49 g (0,5 Mol) Maleinsäureanhydrid und 0,1 g Lauroylperoxid wurden in 400 ml Benzol gelöst und fünf Stunden auf 70°C erhitzt. Aus der viskosen Lösung wurde das Copolymere mit Petroläther (80 bis 100°C) ausgefällt. Das Copolymere ist in verdünnter Natronlauge gut löslich.
Copolymerisation Styrol/Maleinsäureanhydrid:
52 g (0,5 Mol) Styrol und 49 g (0,5 Mol) Maleinsäureanhydrid wurden mit 0,1 % Lauroylperoxid sechs Stunden lang auf 80°C erhitzt. Es wurde ein Polymerisat erhalten, das sich in verdünnter Natronlauge sehr gut löste.

## Patentansprüche

1. Flacher Verbundwerkstoff aus mindestens zwei Schichten, bei der mindestens eine äußere, in Wasser normalerweise unlösliche Deckschicht mit einer in Wasser lösbaren, mindestens einschichtigen Reaktionsschicht verbunden ist, die einen Lösungsvermittler für die Deckschicht enthält und mindestens die Deckschicht durch Extrudieren aus einem thermoplastischen Kunststoff porenfrei ausgebildet ist, dadurch gekennzeichnet, daß der flache Verbundwerkstoff als steife Verbundplatte ausgebildet ist.

2. Flacher Verbundwerkstoff nach Anspruch 1, dadurch gekennzeichnet, daß die Reaktionsschicht halbsteif, vorzugsweise steif ausgebildet ist.

3. Flacher Verbundwerkstoff nach Anspruch 1 oder 2, dadurch gekennzeichnet, daß die Reaktionsschicht Füllstoffe, insbesondere mineralische Füller und/oder Fasermaterial enthält.

4. Flacher Verbundwerkstoff nach einem der Ansprüche 1 bis 3, dadurch gekennzeichnet, daß die Reaktionsschicht nach Art von Papier, Karton, Pappe oder Wellpappe ausgebildet ist und das Bindemittel wasserlöslich ist oder in der durch den in der Reaktionsschicht enthaltenen Lösungsvermittler lösbar ist.

5. Flacher Verbundwerkstoff nach einem der vorhergehenden Ansprüche, dadurch gekennzeichnet, daß er in Form einer Schachtel geformt, insbesondere gefaltet ist.

6. Flacher Verbundwerkstoff nach einem der vorhergehenden Ansprüche, dadurch gekennzeichnet, daß die Reaktionsschicht und/oder die Deckschicht bedruckt oder bedruckbar sind.

7. Flacher Verbundwerkstoff nach einem der vorhergehenden Ansprüche, dadurch gekennzeichnet, daß die Reaktionsschicht und/oder die Deckschicht beim Einsatz des flachen Verbundwerkstoffes für solche Verpackungen, die zum Auflösen in Flüssigkeiten, insbesondere in Abwasser, bestimmt sind, mindestens zum Teil aus Materialien bestehen, die Flockungsmittel sind bzw. beim Auflösen solche ergeben.

8. Flacher Verbundwerkstoff nach einem der vorhergehenden Ansprüche, dadurch gekennzeichnet, daß die Deckschicht (3) und die Reaktionsschicht (2) aus demselben thermoplastischen Kunststoff bestehen und die Reaktionsschicht lösungsvermittelnde Zusätze für sich und für die Deckschicht enthält.

9. Flacher Verbundwerkstoff nach einem der vorhergehenden Ansprüche, dadurch gekennzeichnet, daß sie auf der Deckschicht und/oder zwischen zwei Schichten eine im wesentlichen lichtdichte Schicht, insbesondere eine Aluminiumbedampfung aufweist.

10. Verwendung des flachen Verbundwerkstoffes nach einem der vorhergehenden Ansprüche für Verpackungen, insbesondere solchen, die ausschließlich aus löslichen bzw. in feuchtem oder wässrigem Medium leicht zerfallenden Bestandteilen bestehen.

## Claims

1. Flat composite material comprising at least two layers, in which at least one outer cover layer, normally insoluble in water, is connected to a water-soluble, at least single-layer reaction layer which contains a dissolving intermediary for the cover layer, at least the cover layer being constructed free from pores by extrusion from a thermoplastic material, characterized in that the flat composite material is constructed in the form of a rigid composite sheet.

2. Flat composite material according to claim 1, characterized in that the reaction layer is semi-rigid, preferably rigid.

3. Flat composite material according to claims 1 or 2, characterized in that the reaction layer contains fillers, more particularly mineral fillers and/or fibrous material.

4. Flat composite material according to one of the claims 1 to 3, characterized in that the reaction layer is constructed after the fashion of paper, cardboard, pasteboard or corrugated pasteboard, and the binder is water-soluble or soluble in the dissolving intermediary contained in the reaction layer.

5. Flat composite material according to one of the preceding claims, characterized in that it is shaped into, more particularly folded, into the form of a box.

6. Flat composite material according to one of the preceding claims, characterized in that the reaction layer and/or the cover layer are printed or can be printed on.

7. Flat composite material according to one of the preceding claims, characterized in that when the flat

7

composite material is used for packings which are intended to dissolve in liquids, more particularly sewage, the reaction layer and/or the cover layer are at least partly made from materials which are flocculation agents or produce such when they dissolve.

8. Flat composite material according to one of the preceding claims, characterized in that the cover layer (3) and the reaction layer (2) are made from the same thermoplastic material and the reaction layer contains solubilizing additives for itself and for the cover layer.

9. Flat composite material according to one of the preceding claims, characterized in that it has a substantially lightproof layer, particularly an aluminium deposition on the cover layer and/or between two layers.

10. Use of the flat composite material according to one of the preceding claims for packs, particularly those made exclusively from components which are soluble or readily decompose in a moist or aqueous medium.

## Revendications

1. Matériau composite plat constitué d'au moins deux couches et dans lequel au moins une couche de revêtement extérieur, normalement insoluble dans l'eau, est reliée à une couche réactive, qui est soluble dans l'eau, qui comprend au moins une seule nappe et contient un agent de solubilisation pour la couche de revêtement, et dans lequel au moins la couche de revêtement est réalisée sans pores par extrusion d'une matière thermoplastique, caractérisé en ce que le matériau composite plat est réalisé sous la forme d'une plaque composite rigide.

2. Matériau composite plat selon la revendication 1, caractérisé en ce que la couche réactive est réalisée de manière à être semi-rigide et de préférence rigide.

3. Matériau composite selon la revendication 1 ou 2, caractérisé en ce que la couche réactive contient des matériaux de remplissage, notamment des substances de remplissage minérales et/ou un matériau fibreux.

4. Matériau composite plat selon l'une des revendications 1 à 3, caractérisé en ce que la couche réactive est réalisée sous la forme d'un papier, d'un carton, d'un carton-pâte ou d'un carton ondulé et que le liant est soluble à l'eau ou peut être dissous dans l'agent de solubilisation contenu dans la couche réactive.

5. Matériau composite plat selon l'une des revendications précédentes, caractérisé en ce qu'il est conformé sous la forme d'une boîte et notamment est plié.

6. Matériau composite selon l'une des revendications précédentes, caractérisé en ce que la couche réactive et/ou la couche de revêtement sont imprimées ou peuvent être imprimées.

7. Matériau composite plat selon l'une des revendications précédentes, caractérisé en ce que la couche réactive et/ou la couche de revêtement sont constituées, en vue de l'utilisation du matériau composite plat pour des emballages destinés à se décomposer dans des liquides, notamment dans des eaux usées, au moins pour une part par des matériaux qui sont des agents de floculation ou libèrent de tels produits lors de leur dissolution.

8. Matériau composite plat selon l'une des revendications précédentes, caractérisé en ce que la couche de revêtement (3) et la couche réactive (2) sont constituées par la même matière thermosplastique et que la couche réactive contient des additifs de solubilisation pour elle-même et pour la couche de revêtement.

9. Matériau composite plat selon l'une des revendications précédentes, caractérisé en ce qu'il comporte, sur la couche de revêtement et/ou entre deux couches, une couche sensiblement opaque à la lumière, notamment une couche d'aluminium vaporisé.

10. Utilisation du matériau composite plat selon l'une des revendications précédentes pour des emballages, notamment des emballages qui sont constitués exclusivement par des composants solubles ou se décomposant aisément dans un milieu humide ou aqueux.

FIG. 1

FIG. 2

FIG. 3